# EUROPÄISCHE PATENTSCHRIFT

(11) **EP 1 119 692 B1**
(45) Veröffentlichungstag und Bekanntmachung des Hinweises auf die Patenterteilung: **19.11.2003**
(21) Anmeldenummer: 99946056.1
(22) Anmeldetag: 28.08.1999
(51) Int. Cl.: F02B 37/24, F02D 33/02, F02D 23/00

(54) **VERFAHREN ZUR REGELUNG ODER STEUERUNG EINER AUFGELADENEN BRENNKRAFTMASCHINE**
METHOD FOR REGULATING OR CONTROLLING A SUPERCHARGED INTERNAL COMBUSTION ENGINE
PROCEDE POUR REGULER ET COMMANDER UN MOTEUR A COMBUSTION INTERNE TURBOCOMPRESSE

(30) Priorität: 26.09.1998 DE 19844213
(43) Veröffentlichungstag der Anmeldung: 01.08.2001
(73) Patentinhaber: DaimlerChrysler AG, 70567 Stuttgart (DE)
(72) Erfinder: SCHMID, Wolfram, D-72622 Nürtingen (DE)
(86) Internationale Anmeldenummer: EP9906343
(87) Internationale Veröffentlichungsnummer: WO00019070

(56) Entgegenhaltungen:
- EP-A- 0 323 256
- EP-A- 0 786 589
- DE-C- 4 025 901
- US-A- 4 848 086

## Beschreibung

Die Erfindung betrifft ein Verfahren zur Regelung oder Steuerung einer aufgeladenen Brennkraftmaschine nach dem Oberbegriff des Anspruches 1.

Aus der DE 40 25 901 C1 ist ein Abgasturbolader für eine Brennkraftmaschine bekannt, der eine Turbine mit einer über einen variablen Turbinenleitapparat veränderlich einstellbaren Turbinengeometrie und einen von der Turbine angetriebenen Verdichter zur Erhöhung des Ladedrucks im Zylindereinlaß aufweist. Der Turbinenleitapparat kann mit Hilfe eines Stellglieds so eingestellt werden, daß der wirksame Turbinenquerschnitt der Turbine verändert wird. Hierdurch ist es möglich, je nach Betriebszustand der Brennkraftmaschine verschieden hohe Abgasgegendrücke im Abschnitt zwischen den Zylindern und dem Abgasturbolader zu realisieren, wodurch die Leistung der Turbine und die Leistung des Verdichters je nach Bedarf eingestellt werden können. Der Turbinenleitapparat wird gemäß vorgegebenen Kennlinien auf einen Soll-Ladedruck geregelt.

Um im Instationärbetrieb der Brennkraftmaschine mit einfachen Mitteln eine Verbesserung des Wirkungsgrades zu erzielen, erfolgt die Ladedruckregelung unterhalb und oberhalb eines Schwellwertes für den Abgasgegendruck nach unterschiedlichen Kennlinien. Damit kann verhindert werden, daß es nach einem positiven Lastwechsel noch während des Anstiegs des Ladedrucks zu unkontrollierten Druckerhöhungen in der Abgasleitung stromauf der Turbine kommt. Die Brennkraftmaschine muß nicht mehr gegen einen erhöhten Abgasgegendruck ausschieben, der Wirkungsgrad ist erhöht.

Ein weiteres Verfahren zur Regelung des Ladedrucks ist aus der DE 195 31 871 C1 bekannt. Um im Instationärbetrieb der Brennkraftmaschine, insbesondere nach positivem Lastwechsel aus niederen Last- und Drehzahlbereichen heraus, den Wirkungsgrad zu verbessern, wird gemäß dieser Druckschrift vorgeschlagen, zur Einstellung des Ladedrucks als Steuergröße für die Regelung die Differenz aus Abgasgegendruck und Ladedruck zu bestimmen. Hierdurch kann eine unzulässig hohe Abweichung des Abgasgegendrucks bei positivem Lastwechsel erkannt und durch geeignete Maßnahmen korrigiert werden.

Schließlich ist aus der Druckschrift EP 0 323 256 A2 ein Verfahren zur Steuerung und zur Regelung einer aufgeladenen Motorbrennkraftmaschine bekannt, deren Abgasturbolader mit variabler Turbinengeometrie ausgestattet ist. Der vom Turbolader erzeugte Ladedruck kann in Abhängigkeit des Zustands der Brennkraftmaschine entweder mit Hilfe einer Steuerung oder mit Hilfe einer Regelung eingestellt werden. Um in der befeuerten Antriebsbetriebsweise zu verhindern, dass im Übergang von der Steuerung zur Regelung instabile Ladezustände auftreten, welche sich insbesondere durch ein Überschwingen des Ladedrucks über den anzustrebenden Sollwert auszeichnen, wird gemäß der EP 0 323 256 A2 vorgeschlagen, im Übergang von der Steuerung zur Regelung vor dem Einsetzen der Regelung eine Haltezeit abzuwarten, die der Stabilisierung des Ladedrucks dienen soll. Ein weiteres Kriterium für die Entscheidung, ob eine gesteuerte oder geregelte Einstellung des Ladedrucks erfolgen soll, ist der stationäre bzw. instationäre Betriebszustand der Brennkraftmaschine, wobei im instationären Zustand eine Steuerung und im stationären Zustand eine Regelung erfolgen soll. Als Einstellmöglichkeiten für die Beeinflussung des Ladedrucks werden die Stellung der Drosselklappe, die Kraftstoffeinspritzung und die Position der variablen Turbinengeometrie genannt.

Weitere Einsatzgebiete werden in der EP0 323 256 A2 nicht genannt.

Der Erfindung liegt das Problem zugrunde, das Betriebsverhalten des Motors über alle Last- und Drehzahlbereiche im Motorbremsbetrieb zu optimieren.

Dieses Problem wird mit den Merkmalen des Anspruches 1 gelöst.

Erfindungsgemäß wird nunmehr auch im Motorbremsbetrieb im unteren Last-/Drehzahlbereich gesteuert, im oberen Last-/Drehzahlbereich geregelt. Die Aufteilung in einen oberen und einen unteren Last-/Drehzahlbereich mit den jeweils zugeordneten Kennfeldern hat den Vorteil, daß über einen Vergleich mit einem definierten, vorgebbaren Grenzwert entschieden werden kann, ob eine Steuerung oder eine Regelung erfolgen soll. Über die Differenzierung zwischen Steuerung und Regelung kann eine auf die jeweilige Betriebssituation angepaßte, bestmögliche Strategie unter Berücksichtigung von teilweise gegensätzlichen Zielen verfolgt werden. Über die bedarfsgerechte Umschaltung zwischen Regelung und Steuerung kann das Betriebsverhalten der Brennkraftmaschine im Hinblick auf die Fahrdynamik optimiert werden.

Im unteren Last-/Drehzahlbereich ist aufgrund der direkten Ansteuerung eine verzögerungsfreie, schnelle Einstellung der variablen Turbinengeometrie möglich, wodurch das Ansprechverhalten verbessert wird. Ein weiterer Vorteil liegt darin, daß die Steuerung nicht von den Druckverhältnissen im Abgasstrang bzw. im Ansaugtrakt abhängt, so daß äußere Einflüsse, beispielsweise der fallende Atmosphärendruck im Höhenbetrieb, eliminiert und unter allen Bedingungen die gleiche Position der Turbinengeometrie eingestellt werden kann. Zweckmäßig wird in dem unteren Last-/Drehzahlbereich ein Kennfeld mit den Positionen für die Turbinengeometrie vorgegeben. Eine Regelung, die aufgrund des geringen Energiepotentials ohnehin problematisch wäre, weil der Ladedruck im Niederdruckbereich nahezu unabhängig vom Abgasgegendruck und folglich unabhängig von der Stellung der variablen Turbinengeometrie ist, ist nicht erforderlich.

Im oberen Last-/Drehzahlbereich herrscht ein erhöhtes Druckniveau, das eine Regelung begünstigt, so daß auch wechselnde äußere Einflüsse berücksichtigt werden können. Bei diesem Druckniveau steigt der Ladedruck in Abhängigkeit des Stellwegs der Turbinengeometrie stark an, so daß bereits kleine Stellwegänderungen zu einer großen Ladedruckänderung führen. Eine Steuerung wäre in diesem Fall zu ungenau, weil Maßungenauigkeiten durch Verschleiß, thermische Dehnungen etc. zu einer unzulässig hohen Abweichung vom gewünschten Wert führen würden. Die Regelung kann derartige Ungenauigkeiten kompensieren.

Zusätzlich zur Möglichkeit, die Kennfelder für die unterschiedlichen Bereiche im Hinblick auf die Dynamik zu optimieren, können darüberhinaus weitere Unterscheidungsmerkmale wie stationärer/instationärer Motor-Betriebszustand berücksichtigt und diesen Betriebszuständen zusätzliche Kennfelder zugeordnet werden, so daß neben der Differenzierung oberer bzw. unterer Last-/Drehzahlbereich mit den zugehörigen Kennfeldern weitere Kennfelder entsprechend den zusätzlichen Kriterien berücksichtigt werden können.

In bevorzugter Ausführung wird im unteren Last-/Drehzahlbereich die Stellung der variablen Turbinengeometrie im zugehörigen Kennfeld last- und drehzahlabhängig abgespeichert. Hierfür können entweder die Position der Turbinengeometrie oder Stellsignal-Werte, die dem die Turbinengeometrie beaufschlagenden Aktuator zugeführt werden, vorgegeben werden.

Für die Regelung im oberen Last-/Drehzahlbereich werden vorzugsweise Ladedruck-Sollwerte in Abhängigkeit der Last und der Drehzahl vorgegeben. Für die Regelung wird die Stellung der variablen Turbinengeometrie soweit variiert, bis die Ladedruck-Istwerte mit den Sollwerten übereinstimmen.

Alternativ kann die Regelung auch über die Drehzahl erfolgen. In diesem Fall werden Drehzahl-Sollwerte in Abhängigkeit der Last im Kennfeld abgelegt und mit Drehzahl-Istwerten verglichen. In analoger Weise zur Ladedruck-Regelung erfolgt die Einstellung auf die Sollwerte durch Variation der Turbinengeometrie-Stellung.

Weitere Vorteile und zweckmäßige Ausführungsformen sind den weiteren Ansprüchen, der Figurenbeschreibung und den Zeichnungen zu entnehmen. Es zeigen:
- Fig. 1: ein Drehzahl-Drehmoment-Schaubild mit unterschiedlichen Bereichen für die Regelung und Steuerung und zugehörigen Ladedruck-Verläufen,
- Fig. 2: ein Blockschaltbild einer Steuerung der variablen Turbinengeometrie,
- Fig. 3: ein Blockschaltbild einer Regelung des Ladedrucks.

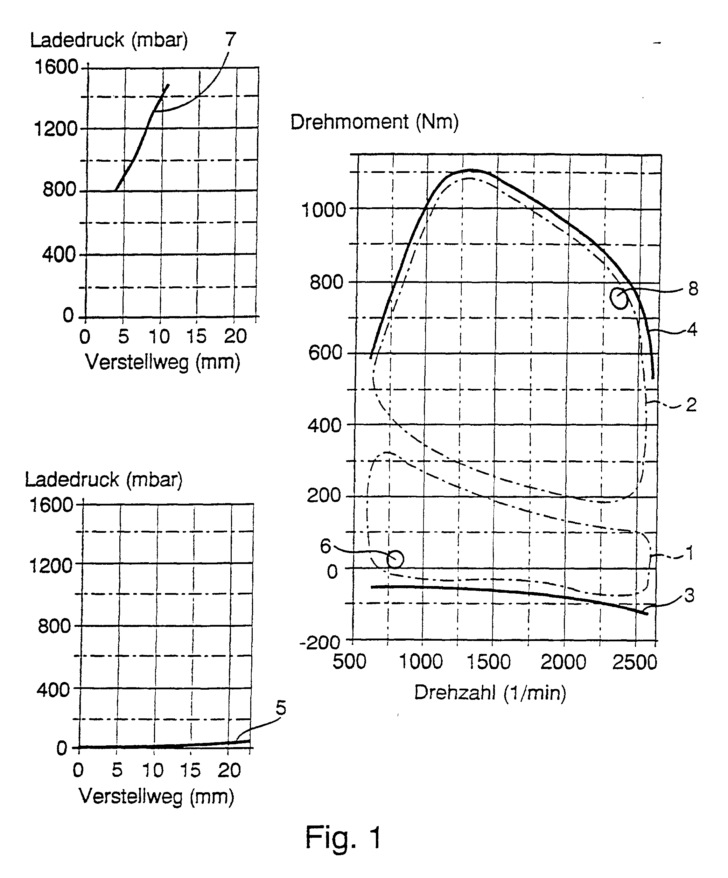

In dem in der rechten Bildhälfte in Fig. 1 dargestellten Drehzahl-Drehmoment-Schaubild sind zwei Bereiche 1, 2 eingetragen, die unterschiedlich hohen Last-/Drehzahlbereichen mit unterschiedlicher Strategie zur Einstellung der variablen Turbinengeometrie (VTG) einer aufgeladenen Brennkraftmaschine entsprechen. Zur Unterscheidung zwischen unterem und oberem Last-/Drehzahlbereich kann für die Last und/oder die Drehzahl ein Grenzwert vorgegeben werden. Über einen Motor-Kennwert - zweckmäßig die aktuelle Last bzw. Drehzahl in der dem Grenzwert entsprechenden Einheit - kann der aktuell geltende Last-/Drehzahlbereich identifiziert werden. Jedem Last-/Drehzahlbereich ist ein Kennfeld zugeordnet. Über- oder unterschreitet der Motor-Kennwert den vorgegeben Grenzwert, so erfolgt ein Umschalten in den anderen Last-/Drehzahlbereich mit dem jeweils zugeordneten Kennfeld. Als Grenzwert bzw. Motor-Kennwert kann entweder die Last oder die Drehzahl oder eine Kombination von Last und Drehzahl herangezogen werden.

Im unteren Bereich 1, der dem unteren Last-/Drehzahlbereich entspricht, erfolgt eine Steuerung der VTG gemäß einem diesem Bereich zugeordneten Kennfeld, in dem bei Einsatz einer Klappenturbine Klappenpositionen last- und drehzahlabhängig abgespeichert sind. Im oberen Bereich 2, der dem oberen Last-/Drehzahlbereich entspricht, erfolgt eine Ladedruck-Regelung gemäß einem Kennfeld, in dem Ladedruck-Sollwerte last- und drehzahlabhängig abgespeichert sind. Der Drehmoment-Verlauf ist nach unten und nach oben durch eine Minimum-Kurve 3 bzw. eine Maximum-Kurve 4 begrenzt.

Dem unteren Bereich 1 ist eine Ladedruck-Kurve 5 aus der linken unteren Bildhälfte in Fig. 1 zugeordnet, die den Verlauf des Ladedrucks in Abhängigkeit des Verstellwegs der VTG in einem willkürlich gewählten Betriebspunkt 6 innerhalb des Bereichs 1 darstellt. Bei einem kleinen Verstellweg befindet sich die VTG in ihrer Öffnungsstellung, in der der wirksame rurbinenquerschnitt nicht oder nur minimal reduziert ist. Im Bereich des maximalen Verstellwegs befindet sich die VTG in ihrer Staustellung, in der der wirksame Turbinenquerschnitt weitestmöglich reduziert ist.

Innerhalb des unteren Bereiches 1 steigt der Ladedruck gemäß der eingezeichneten Ladedruck-Kurve 5 mit steigendem Verstellweg der VTG nur geringfügig an, es besteht praktisch keine Abhängigkeit zwischen dem Ladedruck und dem Verstellweg der VTG, so daß eine Ladedruck-Regelung durch eine Einstellung über die VTG in diesem Bereich keinen oder nur einen kleinen Effekt zeigen würde. Im unteren Bereich 1 wird daher eine Steuerung der VTG gemäß dem diesem Bereich zugeordneten Kennfeld durchgeführt.

Im oberen Drehmoment-Bereich 2 ist ein Betriebspunkt 8 eingetragen, dem eine Ladedruck-Kurve 7 in Abhängigkeit des Verstellwegs der VTG gemäß der linken oberen Bildhälfte in Fig. 1 zugeordnet ist. Die Ladedruck-Kurve 7 steigt in Abhängigkeit des Verstellwegs stark an. In diesem Bereich wird eine Ladedruck-Regelung durchgeführt, um den Istwert des Ladedrucks exakt an den Sollwert angleichen zu können und Abweichungen, hervorgerufen durch Maßungenauigkeiten, Verschleiß, Dehnungen etc., kompensieren zu können.

Anstelle einer Ladedruck-Regelung kann auch eine vom Ladedruck linear oder nichtlinear abhängende Motor-Betrieb- oder Zustandsgröße geregelt werden. Es kann insbesondere eine Laderdrehzahl-Regelung eingesetzt werden, wobei in diesem Fall als oberes Kennfeld Sollwerte für die Laderdrehzahlen in Abhängigkeit der Last und/oder der Motordrehzahl vorgegeben werden.

Als VTG kann eine Turbine mit Axialschieber, eine Turbine mit Radialleitgitter oder eine Klappenturbine eingesetzt werden.

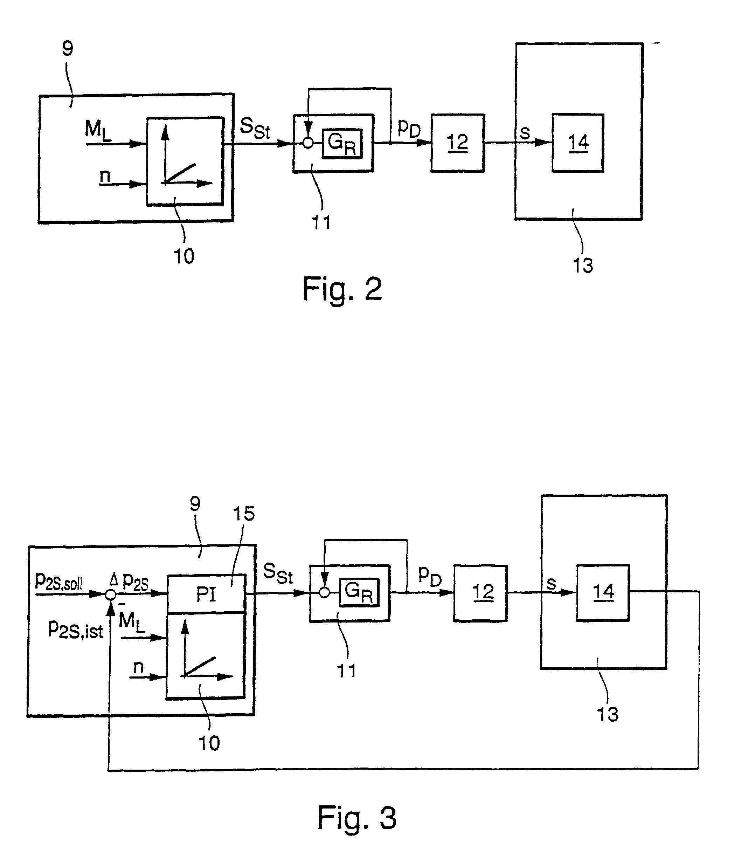

Fig. 2 zeigt eine Einrichtung, dargestellt als Blockschaltbild, für eine Steuerung der VTG im unteren Last-/Drehzahlbereich. In einer Motorsteuer- und Regeleinheit 9 ist ein erstes Kennfeld 10 abgespeichert, in welchem in Abhängigkeit der Motorlast M_{L} und der Motordrehzahl n Werte für die Positionen der VTG bzw. diesen Positionen entsprechende Werte abgelegt sind. Die Motorlast M_{L} und die Motordrehzahl n liegen als Eingangssignal an der Motorsteuer- und Regeleinheit 9 an, als Ausgangssignal liefert die Steuer- und Regeleinheit 9 ein pulsweitenmoduliertes Stellsignal S_{St}, das als Eingangssignal einem elektropneumatischen Wandler 11 zugeführt wird, welcher als Ausgangssignal einen Steuerdruck p_{D} erzeugt. Dem Wandler 11 kann ein Regler G_{R} unterlegt sein, dem die Aufgabe zukommt, Schwankungen in der Druckversorgung der Brennkraftmaschine zu kompensieren, so daß derartige Schwankungen nicht auf den generierten Steuerdruck p_{D} durchschlagen.

Der Steuerdruck p_{D} wird dem Aktuator 12 der VTG als Eingangsdruck zugeführt, der entsprechend dem anliegenden Steuerdruck p_{D} einen Stellweg s erzeugt, mit dem die VTG des Abgasturboladers 14 des Motors 13 beaufschlagt wird.

In Fig. 3 ist eine als Blockschaltbild dargestellte Einrichtung für eine Ladedruck-Regelung im oberen Last-/Drehzahlbereich gezeigt. Die Motorsteuer- und Regeleinheit 9 umfaßt neben dem dem oberen Last-/Drehzahlbereich zugeordneten Kennfeld 10 auch einen Regler 15, der im gezeigten Ausführungsbeispiel als PI-Regler ausgeführt ist. Im Kennfeld 10 sind last- und drehzahlabhängig Ladedruck-Sollwerte p_{2S,soll} abgespeichert. In Abhängigkeit der Eingangssignale M_{L} für die Motorlast und n für die Motordrehzahl werden die Ladedruck-Sollwerte p_{2S,soll} mit Ladedruck-Istwerten p_{2S,ist} verglichen, die im Motor 13 erfaßt und der Steuer- und Regeleinheit 9 zugeführt werden. Die Differenz Δp_{2S} zwischen Ladedruck-Soll- und Istwert wird dem Regler 15 zugeführt, in dem gemäß dem gegebenen Regelgesetz das Stellsignal S_{St} als pulsweitenmoduliertes Ausgangssignal erzeugt wird. Im weiteren Verlauf wird in entsprechender Weise zur Steuerung nach Fig. 2 das Stellsignal S_{St} dem Wandler 11 zugeführt, dort gegebenenfalls im Regler G_{R} einer Druckregelung unterzogen, der erzeugte Steuerdruck p_{D} dem Aktuator 12 zugeführt und schließlich die VTG des Abgasturboladers 14 vom Stellweg s des Aktuators 12 beaufschlagt.

Das beschriebene Verfahren kann sowohl für aufgeladene Brennkraftmaschinen für Nutzfahrzeuge als auch für Personenkraftwagen eingesetzt werden. Das Verfahren ist für Ottomotoren und für Dieselmotoren verwendbar.

Es kann zweckmäßig sein, nicht nur zwei, sondern mehrere Last-/Drehzahlbereiche zu unterscheiden und jedem Last-/Drehzahlbereich ein Kennfeld zuzuordnen. Darüberhinaus können weitere Betriebsarten wie beispielsweise Stationär-/Instationärbetrieb berücksichtigt werden und an jede Betriebsart angepaßte Kennfelder vorgegeben werden. Das Verfahren wird im Motorbremsbetrieb in verschiedenen, aufgezeigten Betriebszuständen (steuern bzw. regeln) eingesetzt.

## Patentansprüche

1. Verfahren zur Regelung oder Steuerung einer aufgeladenen Brennkraftmaschine, die einen Abgasturbolader mit einer Abgasturbine mit variabler Turbinengeometrie zur veränderlichen Einstellung des wirksamen Turbinenquerschnitts und mit einem Ladeluftverdichter umfaßt, wobei die Turbinengeometrie entsprechend dem Betriebszustand des Motors zwischen einer Offenstellung und einer Staustellung verstellbar ist, wobei zwei Last-/Drehzahlbereiche unterhalb und oberhalb eines vorgebbaren Grenzwerts festgelegt werden und jedem Last-/Drehzahlbereich ein Kennfeld zugeordnet wird, wobei im Motorbremsbetrieb bei einer Änderung eines signifikanten Motor-Kennwerts der aktuelle Last-/Drehzahlbereich identifiziert und zwischen den Kennfeldern umgeschaltet wird, und wobei im unteren Last-/Drehzahlbereich die Einstellung der variablen Turbinengeometrie mittels einer Steuerung in Abhängigkeit des dem unteren Last-/Drehzahlbereich zugeordneten Kennfelds und im oberen Last-/Drehzahlbereich die Einstellung der variablen Turbinengeometrie mittels einer Regelung in Abhängigkeit des dem oberen Last-/Drehzahlbereich zugeordneten Kennfelds erfolgt.

2. Verfahren nach Anspruch 1,
**dadurch gekennzeichnet,**
**daß** in dem dem unteren Last-/Drehzahlbereich zugeordneten Kennfeld Positionen der variablen Turbinengeometrie abgespeichert sind.

3. Verfahren nach Anspruch 1,
**dadurch gekennzeichnet,**
**daß** in dem dem unteren Last-/Drehzahlbereich zugeordneten Kennfeld Werte für Stellsignale für einen die variable Turbinengeometrie beaufschlagenden Aktuator abgespeichert sind.

4. Verfahren nach einem der Ansprüche 1 bis 3,
**dadurch gekennzeichnet,**
**daß** im oberen Last-/Drehzahlbereich eine Regelung des Ladedrucks erfolgt und in dem zugeordneten Kennfeld Ladedruck-Sollwerte abgespeichert sind.

5. Verfahren nach einem der Ansprüche 1 bis 3,
**dadurch gekennzeichnet,**
**daß** im oberen Last-/Drehzahlbereich eine Regelung der Drehzahl des Abgasturboladers erfolgt und in dem zugeordneten Kennfeld Laderdrehzahl-Sollwerte abgespeichert sind.

## Claims

1. Method of closed-loop or open-loop control of a supercharged internal combustion engine having an exhaust gas turbo-charger incorporating an exhaust gas turbine with variable turbine geometry for variably adjusting the effective turbine cross section, and with a boost air compressor, whereby the turbine geometry can be adjusted between an open position and a back-pressure position depending on the operating state of the engine, for which two load/engine speed ranges below and above a pre-definable threshold value are set and a characteristic map assigned to each load/engine speed range, the instantaneous load/speed range being identified and a switch made between characteristic maps when a change occurs in a significant engine characteristic value during engine braking operation, and in the lower load/engine speed range the variable turbine geometry is set by means of an open-loop control as a function of the characteristic map assigned to the lower load/engine speed range and in the upper load/engine speed range the variable turbine geometry is set by means of a closed-loop control as a function of the characteristic map assigned to the upper load/engine speed range.

2. Method as claimed in claim 1,
**characterised in that**
positions of the variable turbine geometry are stored in the characteristic map assigned to the lower load/engine speed range.

3. Method as claimed in claim 1,
**characterised in that**
values for actuation signals for an actuator pressurising the variable turbine geometry are stored in the characteristic map assigned to the lower load/engine speed range.

4. Method as claimed in one of claims 1 to 3,
**characterised in that**
the boost pressure is controlled by closed-loop control in the upper load/engine speed range and boost pressure desired values are stored in the associated characteristic map.

5. Method as claimed in one of claims 1 to 3,
**characterised in that**
the speed of the exhaust gas turbo-charger is controlled by closed-loop control in the upper load/engine speed range and charger speed desired values are stored in the associated characteristic map.

## Revendications

1. Procédé pour réguler ou commander un moteur à combustion interne suralimenté qui comprend un turbocompresseur à gaz d'échappement avec une turbine à gaz d'échappement à géométrie variable pour le réglage variable de la section transversale efficace de la turbine et avec un compresseur d'air chargé, la géométrie de la turbine étant réglable en correspondance de l'état de fonctionnement du moteur entre une position d'ouverture et une position de fermeture, deux plages de charge/vitesse de rotation étant fixées au-dessous et au-dessus d'une valeur limite prédéterminée et un champ caractéristique étant associé à chaque plage de charge/vitesse de rotation, dans lequel, pendant le fonctionnement du frein moteur, lors d'une modification de la valeur caractéristique significative du moteur, la plage actuelle de charge/vitesse de rotation est identifiée et une commutation entre les champs caractéristiques a lieu, et dans la plage inférieure de charge/vitesse de rotation le réglage de la géométrie variable de la turbine s'effectue au moyen d'une commande en fonction du champ caractéristique associé à la plage inférieure de charge/vitesse de rotation, et dans la plage supérieure de charge/vitesse de rotation le réglage de la géométrie variable de la turbine s'effectue au moyen d'une régulation en fonction du champ caractéristique associé à la plage supérieure de charge/vitesse de rotation.

2. Procédé selon la revendication 1, **caractérisé en ce que** des positions de la géométrie variable de la turbine sont mémorisées dans le champ caractéristique associé à la plage inférieure de charge/vitesse de rotation.

3. Procédé selon la revendication 1, **caractérisé en ce que** des valeurs pour des signaux de positionnement pour un actionneur sollicitant la géométrie variable de la turbine sont mémorisées dans le champ caractéristique associé à la plage inférieure de charge/vitesse de rotation.

4. Procédé selon l'une des revendications 1 à 3, **caractérisé en ce qu'**une régulation de la pression de charge s'effectue dans la plage supérieure de charge/vitesse de rotation, et des valeurs de consigne de la pression de charge sont mémorisées dans le champ caractéristique associé.

5. Procédé selon l'une des revendications 1 à 3, **caractérisé en ce qu'**une régulation de la vitesse de rotation du turbocompresseur à gaz d'échappement s'effectue dans la plage supérieure de charge/vitesse de rotation, et des valeurs de consigne de la vitesse de rotation du compresseur sont mémorisées dans le champ caractéristique associé.
